# EUROPÄISCHE PATENTSCHRIFT

(11) **EP 0 522 288 B1**
(45) Veröffentlichungstag und Bekanntmachung des Hinweises auf die Patenterteilung: **14.09.1994**
(21) Anmeldenummer: 92109417.3
(22) Anmeldetag: 04.06.1992
(51) Int. Cl.: F01P 3/18, F28D 1/04, F02B 29/04

(54) **Kühleranordnung**
Cooler arrangement
Aménagement d'échangeur de chaleur

(30) Priorität: 11.07.1991 DE 4122899
(43) Veröffentlichungstag der Anmeldung: 13.01.1993
(73) Patentinhaber: MERCEDES-BENZ AG, 70327 Stuttgart (DE)
(72) Erfinder: Eibl, Markus, Dipl.-Ing., W-7000 Stuttgart 1 (DE)

(56) Entgegenhaltungen:
- EP-A- 0 048 667
- DE-A- 1 755 657
- US-A- 3 439 657

## Beschreibung

Die Erfindung betrifft eine Kühleranordnung gemäß dem Oberbegriff des Hauptanspruchs.

Zur Kühlung von Brennkraftmaschinen in Kraftfahrzeugen werden immer leistungsfähigere Systeme benötigt. Zum einen werden zur Reduzierung der Lärmemission die Motoren mit einer Kapselung umgeben, was zu einer Verringerung der Kühlleistung führt. Zum anderen werden zur Verringerung der Abgasemission vor allem bei Dieselmotoren hohe Ladeluftdrucke verwendet, was eine starke Rückkühlung der Ladeluft und somit hohe Kühlleistungen notwendig macht.

Aus der DE-OS 26 55 017 ist ein mehrteiliges Ladeluft-Kühlsystem bekannt, bei dem Ladeluftkühlerteile vor und hinter einem Flüssigkeitskühler der Brennkraftmaschine vorgesehen sind, wobei die einzelnen Kühler auf der Ladeluftseite mit fallender und im Kühlluftstrom mit steigender Temperatur in Strömungsrichtung hintereinander angeordnet sind. Dies hat den Nachteil, daß nur ein Teil des Ladeluftkühlers von Frischluft und der Flüssigkeitskühler nur von der erwärmten Abluft des stromauf davorliegenden Ladeluftkühlerteils beaufschlagt wird, wodurch sich die Temperaturdifferenz und damit auch die Kühlleistung verringert.

Außerdem wird in in der ATZ (1981) Heft 9, Seite 449/450 vorgeschlagen, nur einen Teil der Stirnfläche des Kühlmittelkühlers durch den Ladeluftkühler zu bedecken, damit Raum für die Anordnung eines weiteren Kühlers gegeben ist.

Der Erfindung liegt die Aufgabe zugrunde, die Kühlleistung einer Kühleranordnung gemäß dem Oberbegriff des Hauptanspruchs zu optimieren.

Die Aufgabe wird erfindungsgemäß durch die Merkmale des kennzeichnenden Teiles des Hauptanspruches gelöst.

Die Aufteilung des zweiten Kühlers in zwei getrennte und bezüglich der Stirnfläche des ersten Kühlers versetzte Kühlerteile ermöglicht eine Anordnung die es erlaubt, die Temperaturdifferenz zwischen Kühlluft und dem zu kühlenden Medium an allen Stellen des Kühlersystems zu maximieren und dadurch die Kühlleistung der gesamten Kühleranordnung zu optimieren. Dadurch kann entweder bei unveränderter Dimensionierung der Kühleranordnung die Kühlleistung verbessert oder bei gleichbleibender Kühlleistung die Kühleranordnung kompakter ausgeführt werden.

Die erfindungsgemäße Anordnung der Kühlerteile gewährleistet, daß neben dem stromab liegenden Kühlerteil des zweiten Kühlers auch mindestens eine Teilfläche des ersten Kühlers von Frischluft beaufschlagt wird, wodurch eine Abkühlung beider Kühlmedien auf tiefere Temperaturen möglich wird.

Die Anordnung des vorderen Kühlerteils des zweiten Kühlers im Bereich des Einlasses des ersten Kühlers und des hinteren Kühlerteils des zweiten Kühlers im Bereich des Auslasses des ersten Kühlers bringt eine maximierte Temperaturdifferenz zwischen Kühlluft und zu kuhlendem Medium, da die zu kühlenden Medien in beiden Kühlkreisläufen zuerst von der vorgewärmten Abluft des stromaufliegenden Kühlerteils vorgekühlt und erst dann von der kühleren Frischluft beaufschlagt werden.

Ein Ausführungsbeispiel der Erfindung ist anhand der Zeichnung näher beschrieben,wobei
- Fig. 1: eine Kühleranordnung für eine wassergekühlte aufgeladene Brennkraftmaschine in einer Seitenansicht und
- Fig. 2: ein weiteres Ausführungsbeispiel einer erfindungsgemäßen Kühleranordnung ebenfalls in einer Seitenansicht zeigen.

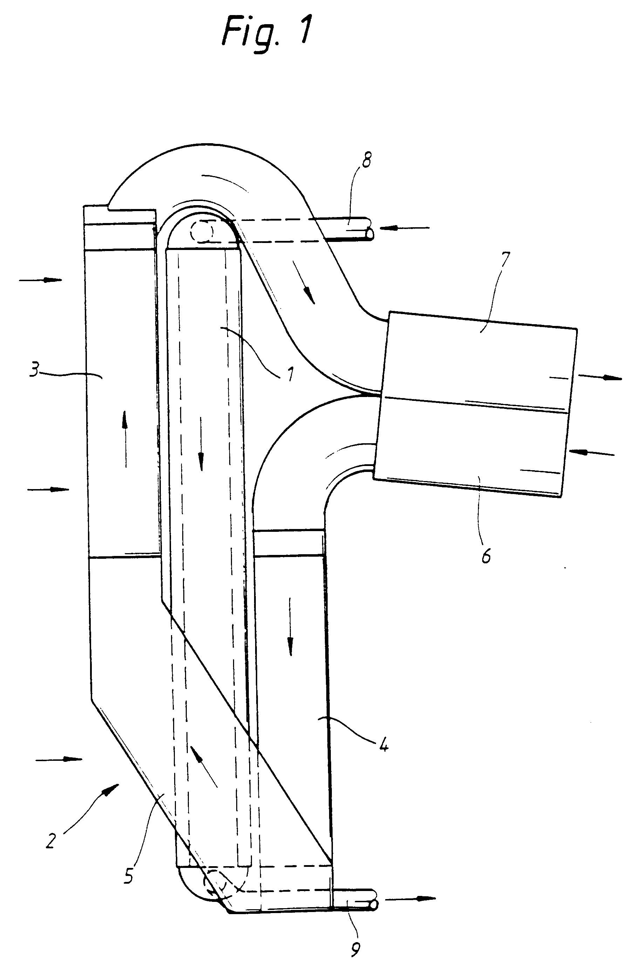

Die Fig. 1 zeigt einen als Luft/Wasser-Wärmetauscher ausgebildeten Motorwasserkühler 1 und einen geteilten, als Luft/Luft-Wärmetauscher ausgebildeten Ladeluftkühler 2. Der Ladeluftkühler 2 besteht aus einem vorderen Kühlerteil 3, einem hinteren Kühlerteil 4 und einer Verbindungsleitung 5, die das hintere Kühlerteil 4 mit dem vorderen Kühlerteil 3 verbindet, wobei die Verbindungsleitung 5 vom unteren seitlichen Rand des hinteren Kühlerteils 4 seitlich am Motorwasser-Kühler 1 vorbei zum unteren seitlichen Rand des vorderen Kühlerteils 3 verläuft. Die Kühler sind in der Reihenfolge vorderes Kühlerteil 3 des Ladeluftkühlers 2, Motorwasser-Kühler 1 und hinteres Kühlerteil 4 des Ladeluftkühlers 2 in Strömungsrichtung der Kühlluft unmittelbar hintereinander angeordnet. Beide Kühlerteile 3 und 4 des Ladeluftkühlers sind so ausgebildet, daß ihre von Kühlluft beaufschlagte Stirnfläche jeweils halb so hoch und gleich breit sind, wie die von Kühlluft beaufschlagte Stirnfläche des Motorwasser-Kühlers. Dabei sind die Kühlerteile des Ladeluftkühlers 2 so angebracht, daß das vordere Kühlerteil 3 vor der oberen Hälfte der Stirnfläche des Motorwasser-Kühlers und das hintere Kühlerteil 4 hinter der unteren Hälfte der Kühlfläche des Motorwasser-Kühlers 1 liegt. Von einem nicht dargestellten, durch eine Abgasturbine angetriebenen Lader wird die komprimierte und heiße Ladeluft dem hinteren Kühlerteil 4 über eine Zuströmleitung 6 zugeführt. Zur weiteren Kühlung wird die vorgekühlte Ladeluft über die Verbindungsleitung 5 in den vorderen Kühlerteil 3 geführt. Nach dem Durchlaufen des gesamten Ladeluftkühlers 2 wird dann die abgekühlte Ladeluft über die Abströmleitung 7 vom vorderen Kühlerteil 3 zur ebenfalls nicht dargestellten Brennkraftmaschine abgeführt.

Der Grund für die Anordnung mit geteiltem Ladeluftkühler 2 liegt darin, daß komprimierte Luft, die über die Zuströmleitung 6 vom Lader zum Ladeluftkühler 2 zugeführt wird, zuerst im hinteren Kühlerteil 4 vorgekühlt wird. Da diese komprimierte Luft sehr heiß ist besteht trotz der Beaufschlagung des hinteren Kühlerteils 4 mit der erwärmten Abluft des Motorwasser-Kühlers 1 ein genügend großer Temperaturunterschied zwischen Kühlluft und Ladeluft, so daß bereits in diesem ersten Teil des Ladeluftkühlers 2 eine große Wärmemenge abgegeben werden kann. Die so bereits vorgekühlte Ladeluft wird dann über die Verbindungsleitung 5 zum vorderen Kühlerteil 3 des Ladeluftkühlers 2 geführt, wo sie durch die Beaufschlagung mit der kühlen Frischluft noch weiter abgekühlt wird. Dieser vordere Kühlerteil 3 ist deshalb notwendig, da die Ladeluft von hochaufgeladenen Dieselmotoren zur Erreichung guter Leistungs- und Abgaswerte auf ca. 50 Grad Celsius abgekühlt werden muß, was nur mit der Beaufschlagung mit kühler Frischluft möglich ist. Mit der Abluft des vorderen Kühlerteils 3 des Ladeluftkühlers 2, die bedingt durch die Vorkühlung der Ladeluft im hinteren Kühlerteil 4 nur noch eine geringe Wärmemenge aufnehmen muß, wird dann der obere Teil des Motorwasser-Kühlers 1 beaufschlagt, wo sich der Einlaß 8 des zu kühlenden Motorwassers befindet. Durch die nur mäßig erwärmte Abluft des vorderen Kühlerteils 3 des Ladeluftkühlers 2 ergibt sich auch hier ein großer Temperaturunterschied zwischen Kühlluft und Motorwasser, so daß bereits in diesem oberen Teil des Motorwasser-Kühlers 1 ein großer Teil der Wärmeenergie abgegeben werden kann. Dies hat zur Folge, daß der mit kühler Frischluft beaufschlagte untere Teil des Motorwasser-Kühlers 1 nur noch einen geringeren Anteil der Wärmemenge aufnehmen muß, so daß die geringere Temperatur dieser Abluft wiederum die große Temperaturdifferenz zur einströmenden Ladeluft im hinteren Kühlerteil 4 des Ladeluftkühlers 2 ermöglicht. Das abgekühlte Motorwasser wird dann über den Auslaß 9, der sich am unteren Teil des Motorwasser-Kühlers 1 befindet, in das Motorkühlsystem eingeleitet.

Diese effektivere Kühleranordnung ermöglicht es entweder bei gleicher Stirnfläche der Kühleranordnung und gleichem Kühlluftstrom die Kühlleistung zu erhöhen oder die gleiche Kühlleistung bei geringerem Kühlluftstrom oder kleinerer Stirnfläche, das heißt mit kompakteren Kühlsystemen, zu erreichen.

In einer weiteren Ausgestaltung der Erfindung ist es auch möglich, den Ladeluftkühler einteilig und den Motorwasser-Kühler zwei- oder mehrteilig auszuführen. Die Anordnung erfolgt dann so, daß ein Teil des Motorwasser-Kühlers vor und ein anderer Teil hinter dem Ladeluftkühler angeordnet wird. Ebenfalls ist eine andere Aufteilung der Kühlflächenverhältnisse der Kühlerteile 3 und 4 denkbar.

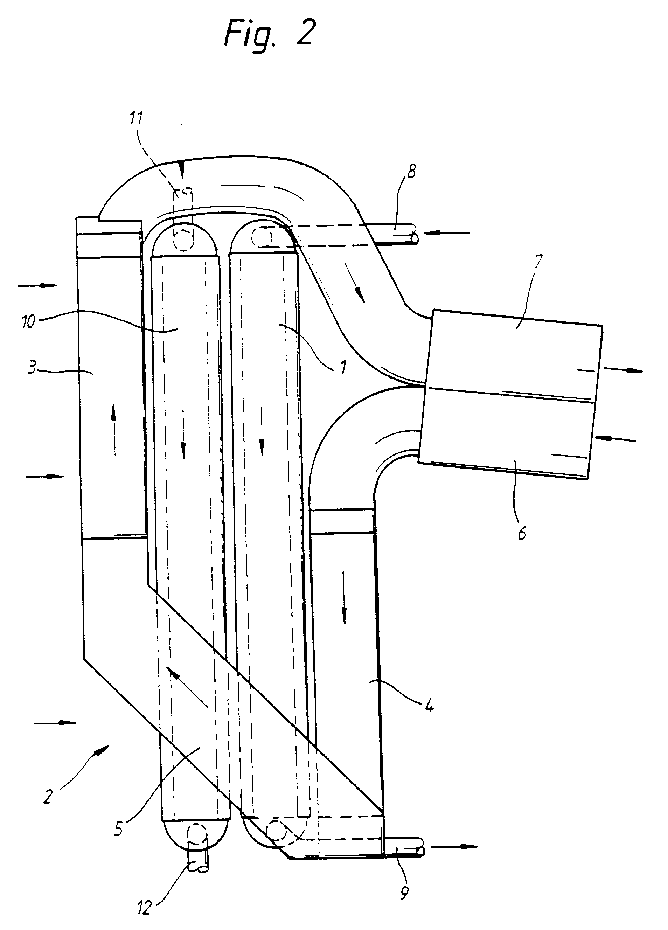

Fig. 2 zeigt ein weiters Ausführungsbeispiel der erfindungsgemäßen Kühleranordnung, wobei gegenüber Fig. 1 gleiche Teile mit gleichen Bezugsziffern gekennzeichnet sind. Im Gegensatz zu Fig. 1 ist in diesem Ausführungsbeispiel ein weiterer ungeteilter Kühler 10, beispielsweise ein Klimakondensator oder ein Ölkühler, bezogen auf den Kühlluftstrom stromauf des Motorwasserkühlers 1 angeordnet. Dem weiteren Kühler 10 wird das zu kühlende Medium über einen im Bereich hinter dem Kühlerteil 3 angeordneten Zuströmkanal 11 zugeführt und über einen Abströmkanal 12, der in dem von Frischluft beaufschlagten Bereich des weiteren Kühlers 10 angeordnet ist, wieder abgeführt. Selbstverständlich können zwischen den Teilen 3 und 4 des Ladeluftkühlers 2 noch weitere ungeteilte Kühler vorgesehen werden, wobei die Stirnflächen dieser weiteren Kühler im Vergleich zur Stirnfläche des Motorwasserkühlers 1 abweichende Abmessungen aufweisen können.

## Patentansprüche

1. Kühleranordnung bei einem Kraftfahrzeug mit mindestens einem ersten (1, 10) und einem zweiten Kühler (2), die gemeinsam von Kühlluft beaufschlagt sind und von denen der zweite Kühler (2) geteilt ist und ein bezogen auf den Kühlluftstrom vor und ein hinter dem mindestens einen ersten Kühler (1, 10) liegendes Kühlerteil (3, 4) aufweist und mit Zufuhr des im zweiten Kühler (2) zu kühlenden Mediums zu dessen hinter dem mindestens einen ersten Kühler (1, 10) liegenden Teil (4),
**dadurch gekennzeichnet,**
daß beide Teile (3, 4) des zweiten Kühlers (2) im wesentlichen verschiedenen, gegeneinander versetzten Teilflächen des mindestens einen ersten Kühlers (1, 10) zugeordnet sind.

2. Kühleranordnung nach Anspruch 1,
**dadurch gekennzeichnet,**
daß die dem Auslaß (9, 12) benachbarte Teilfläche von mindestens einem ersten Kühler (1, 10) mit Frischluft beaufschlagt ist.

## Claims

1. A radiator arrangement in a vehicle with at least one first (1, 10) and one second radiator (2), both of which are subject to a stream of cold air and the second (2) of which is divided, one section (3) being located in front of the first radiator (1, 10) and the second (4) behind it in relation to the cold air stream and with the intake for the medium to be cooled in the second radiator (2) in section (4) behind the first radiator (1, 10),
**characterised in that**
both sections (3, 4) of the second radiator (2) are located in significantly different, and offset positions in relation to the first radiator (1, 10).

2. A radiator arrangement as per claim 1,
**characterised in that**
the surface next to the outlet (9, 12) of the first radiator (1, 10) is subject to a stream of fresh air.

## Revendications

1. Ensemble de radiateurs dans un véhicule, comprenant au moins un premier (1,10) et un second radiateur (2), qui sont sollicités en commun par de l'air de refroidissement et parmi lesquels le second radiateur (2) est divisé et comporte une partie (3) située, en relation avec le courant d'air de refroidissement, avant le premier radiateur (1,10) au nombre d'au moins un, et une partie (4) située en arrière de ce premier radiateur, le fluide à refroidir dans le second radiateur (2) étant introduit dans la partie (4) située en arrière du premier radiateur (1,10) au moins prévu, caractérisé en ce que les deux parties (3,4) du second radiateur (2) sont associées à des surfaces partielles, sensiblement différentes et mutuellement décalées, du premier radiateur (1,10) au moins prévu.

2. Ensemble de radiateurs selon la revendication 1, caractérisé en ce que la surface partielle, adjacente à la sortie (9,12), du premier radiateur (1,10) au nombre d'au moins un est sollicitée par de l'air frais.
